# EUROPÄISCHE PATENTSCHRIFT

(11) **EP 0 445 518 B1**
(45) Veröffentlichungstag und Bekanntmachung des Hinweises auf die Patenterteilung: **16.03.1994**
(21) Anmeldenummer: 91101024.7
(22) Anmeldetag: 26.01.1991
(51) Int. Cl.: B23B 5/32

(54) **Unterflur-Radsatzdrehmaschine zum Reprofilieren der Räder von Eisenbahn-Radsätzen**
Underfloor wheel lathe for reprofiling the wheels of railway-wheelsets
Toir à roues, en fosse pour reprofiler des roues des essieux de chemin de fer

(30) Priorität: 03.03.1990 DE 4006667
(43) Veröffentlichungstag der Anmeldung: 11.09.1991
(73) Patentinhaber: Hoesch Maschinenfabrik Deutschland Aktiengesellschaft, 44145 Dortmund (DE)
(72) Erfinder: Brinkmann, Dirk, Dipl.-Ing., W-4670 Lünen (DE); Leitloff, Uwe, Dipl.-Ing., W-4320 Hattingen 13 (DE)

(56) Entgegenhaltungen:
- EP-A- 0 195 891
- DE-A- 3 012 996
- DE-B- 1 286 371
- DE-C- 2 937 751

## Beschreibung

Die Erfindung bezieht sich auf eine Unterflur-Radsatzdrehmaschine zum Reprofilieren der Räder von Eisenbahn-Radsätzen, mit zwei je einem Rad des Radsatzes zugeordneten Maschineneinheiten, von denen jede einen Maschinenständer, einen Drehsupport, eine Achslagerstützvorrichtung, eine Niederhaltevorrichtung, zwei an ein Rad des Radsatzes andrückbare und in einem Reibrollenträger gelagerte Reibrollen aufweist, wobei mindestens eine der beiden Reibrollen eines jeden Reibrollenträgers antreibbar ist und wobei jeder Reibrollenträger um eine in der Mittenebene der Unterflur-Radsatzdrehmaschine bewegbare Schwenkachse schwenkbar ist.

Eine Unterflur-Radsatzdrehmaschine der vorgenannten Art ist durch die DE-A-29 37 751 bekannt.

Bei einer solchen Unterflur-Radsatzdrehmaschine sind zur Erhöhung der Zerspanungsleistung mehrere an den Reibrollenträgern angreifende Bremseinrichtungen eingesetzt, die das Verschwenken der Reibrollenträger während der Reprofilierung der Räder des Radsatzes erschweren.

Die an den Reibrollenträgern angreifenden Bremseinrichtungen werden als nachteilig empfunden, da sie einen ziemlichen Aufwand erfordern.

Der Erfindung liegt die Aufgabe zugrunde, eine Unterflur-Radsatzdrehmaschine der eingangs genannten Art so auszubilden, daß sie eine Erhöhung der Zerspanungsleistung ohne an den Reibrollenträgern angreifende Bremseinrichtungen ermöglicht.

Erfindungsgemäß wird diese Aufgabe bei der gattungsbildenden Unterflur-Radsatzdrehmaschine dadurch gelöst, daß an jeden Reibrollenträger zwei Andruckvorrichtungen angelenkt sind, die in Bezug auf die zugehörige Schwenkachse entgegengesetzt wirkende Drehmomente erzeugen.

Jede Schwenkachse ist horizontal gelagert und vertikal beweglich.

Zweckmäßigerweise ist jede Schwenkachse eine Symmetrieachse der Achsen zweier Reibrollen eines Reibrollenträgers.

Nach einem weiteren Merkmal einer Weiterbildung der Erfindung besteht jede Andrückvorrichtung aus einem Pneumatik-Balgzylinder und einem Hebelgetriebe.

Aus dem Dokument EP-A-0 195 891 ist zwar eine Unterflur-Radsatzdrehmaschine bekannt, bei der je Maschineneinheit zwei Andrückvorrichtungen in Form zweier Pneumatik-Balgzylinder vorhanden sind. Diese Maschine weist jedoch keinen gemeinsamen Reibrollenträger für die beiden Reibrollen jeder Maschineneinheit auf; vielmehr ist dort jede Reibrolle an je einer einzeln schwenkbaren und von einem Pneumatik-Balgzylinder angetriebenen Schwinge angeordnet.

Im folgenden wird eine Ausführungsform der Erfindung anhand einer Zeichnung, in der ein Ausführungsbeispiel schematisch dargestellt ist, näher beschrieben.

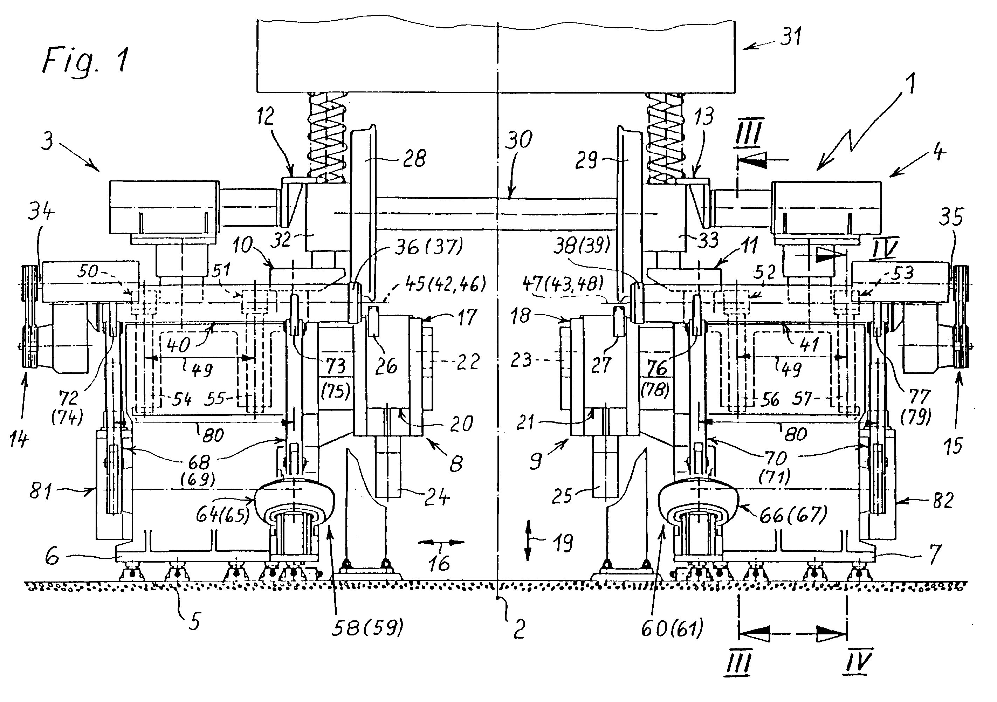

Es zeigt
- Fig. 1: eine Unterflur-Radsatzdrehmaschine mit einem von ihr aufgenommenen Eisenbahn-Radsatz in Ansicht mit einer Teilansicht eines auf dem Eisenbahn-Radsatz aufliegenden Fahrzeugaufbaus und mit einem Teilschnitt durch das Fundament,

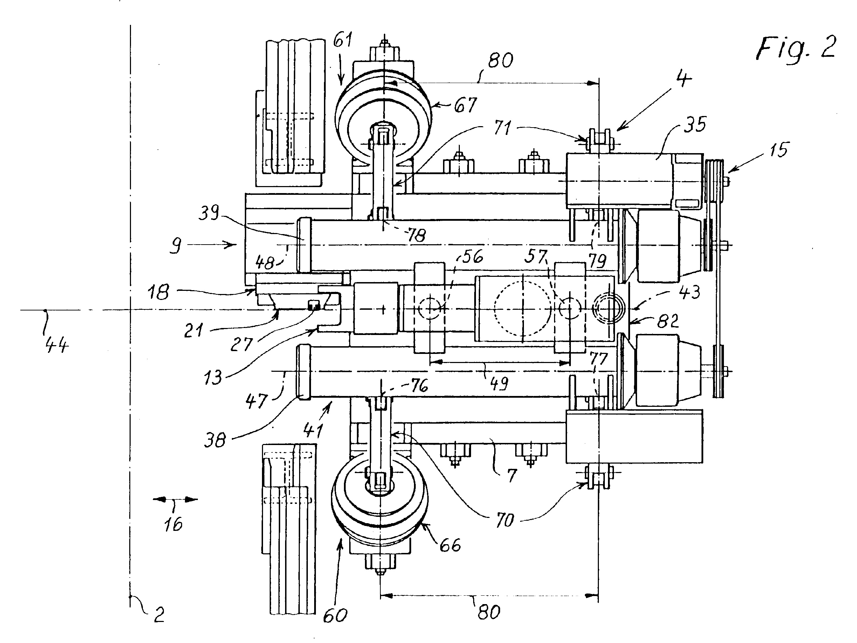

- Fig. 2: die rechte Maschineneinheit der Unterflur-Radsatzdrehmaschine im Grundriß in vergrößertem Maßstab,
- Fig. 3: den Schnitt entsprechend der Linie III-III in Fig. 1 in vergrößertem Maßstab,

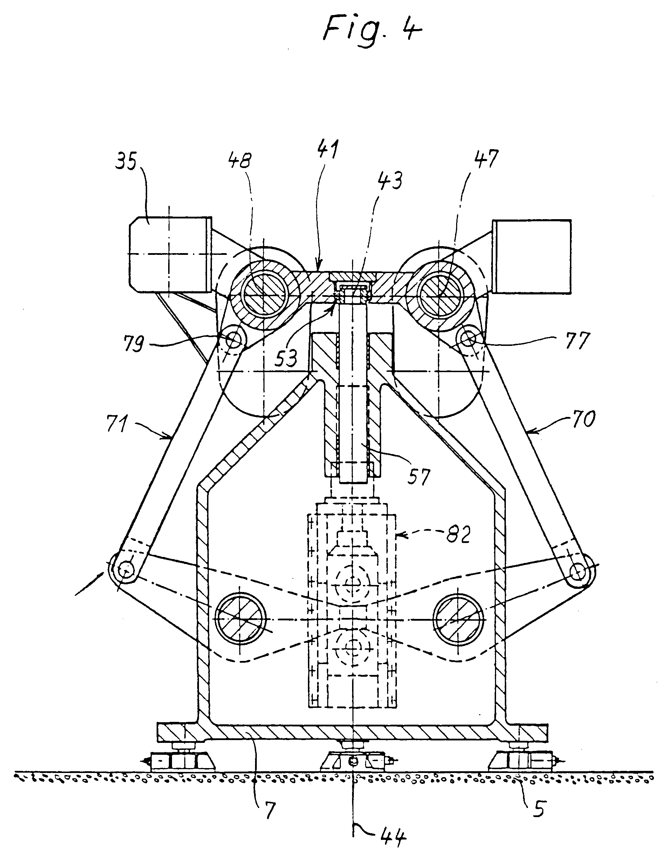

- Fig. 4: den Schnitt entsprechend der Linie IV-IV in Fig. 1 in vergrößertem Maßstab.

Eine Unterflur-Radsatzdrehmaschine 1 hat zwei symmetrisch zur Gleismitte 2 angeordnete Maschineneinheiten 3, 4, die fest mit einem Fundament 5 verbunden sind.

Jede Maschineneinheit 3, 4 enthält einen Maschinenständer 6, 7, einen Drehsupport 8, 9, eine Achslagerstützvorrichtung 10, 11, eine Niederhaltevorrichtung 12, 13 und einen Reibrollenantrieb 14, 15.

Jeder Drehsupport 8, 9 ist ausgeführt mit einem in Längsvorschubrichtung (Doppelpfeil 16) verschiebbaren Längsschlitten 17, 18 und einem in Planvorschubrichtung (Doppelpfeil 19) verschiebbaren Planschlitten 20, 21.

Jeder Längsschlitten 17, 18 wird angetrieben von einem Motor 22, 23, jeder Planschlitten 20, 21 von einem Motor 24, 25.

Auf jedem Planschlitten 20, 21 ist ein Drehwerkzeug 26, 27 zum Reprofilieren je eines Rades 28, 29 eines Radsatzes 30 befestigt.

Der Radsatz 30, der in einem Schienenfahrzeug 31 eingebaut ist, wird während der Reprofilierung der Räder 28, 29 an seinen Achslagerkästen 32, 33 gehalten durch die Achslagerstützvorrichtungen 10, 11 und die Niederhaltevorrichtungen 12, 13.

Bei jedem Reibrollenantrieb 14, 15 erzeugt ein Motor 34, 35 die Drehbewegung zweier Reibrollen 36, 37, 38, 39.

Je zwei Reibrollen 36, 37, 38, 39 eines jeden Reibrollenantriebes 14, 15 sind an einem Reibrollenträger 40, 41 angeordnet, der um eine horizontale, vertikal bewegliche Schwenkachse 42, 43 schwenkbar ist. Dabei befindet sich jede Schwenkachse 42, 43 stets in der vertikalen Mittenebene 44 der Unterflur-Radsatzdrehmaschine 1.

Die Achsen 45, 46, 47, 48 zweier Reibrollen 36, 37, 38, 39 eines jeden Reibrollenantriebes 14, 15 sind parallel und symmetrisch zur Schwenkachse 42, 43 des Reibrollenträgers 40, 41 angeordnet.

Jede horizontale, vertikal bewegliche Schwenkachse 42, 43 wird gebildet von zwei in einem Abstand 49 angeordneten Gelenklagern 50, 51, 52, 53, die einerseits in einem Reibrollenträger 40, 41 und andererseits an je einer vertikal geführten Führungsstange 54, 55, 56, 57 befestigt sind.

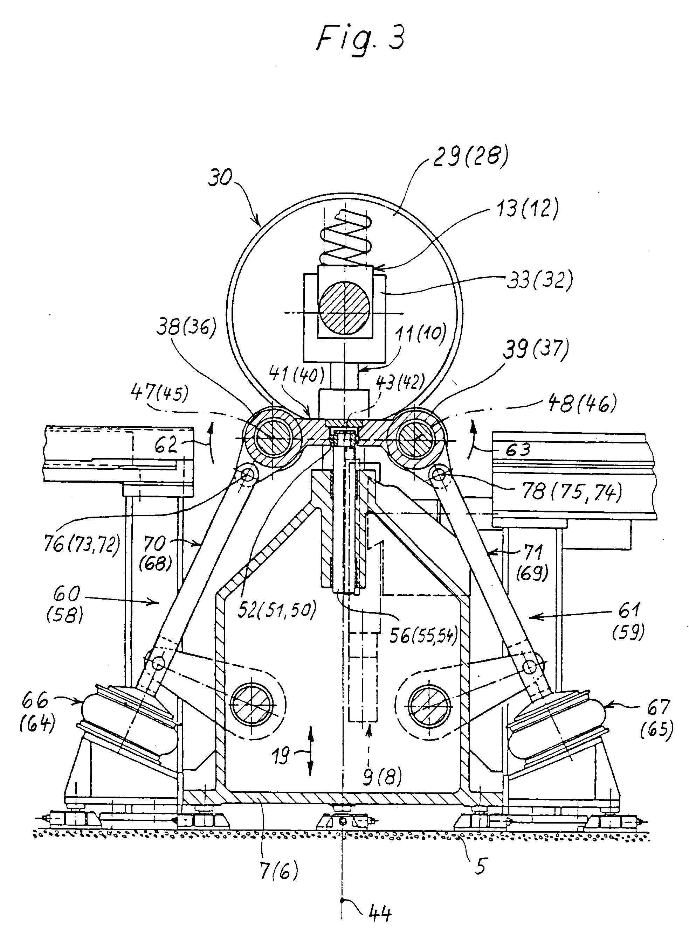

Zum Andrücken der Reibrollen 36, 37, 38, 39 an die Räder 28, 29 des Radsatzes 30 sind an jeden Reibrollenträger 40, 41 zwei Andrückvorrichtungen 58, 59, 60, 61 angelenkt, die in Bezug auf die zugehörige Schwenkachse 42, 43 entgegengesetzt wirkende Drehmomente erzeugen. Die Drehrichtungen der entgegengesetzt wirkenden Drehmomente sind mit 62 und 63 bezeichnet (Fig. 3).

Jede Andrückvorrichtung 58, 59, 60, 61 besteht aus einem Pneumatik-Balgzylinder 64, 65, 66, 67 und einem Hebelgetriebe 68, 69, 70, 71.

Es sind jeweils zwei Hebelgetriebe 68, 69, 70, 71 über je zwei Anlenkpunkte 72, 73, 74, 75, 76, 77, 78, 79 mit einem Reibrollenträger 40, 41 verbunden. Der horizontale Abstand zweier Anlenkpunkte 72, 73, 74, 75, 76, 77, 78, 79 ist mit 80 bezeichnet.

Jeder Reibrollenträger 40, 41 ist über die mit ihm verbundenen Hebelgetriebe 68, 69, 70, 71 an eine Synchronvorrichtung 81, 82 angeschlossen.

Beide Synchronvorrichtungen 81, 82 erzeugen während der Radsatzzentrierung eine synchrone Aufwärtsbewegung der Reibrollen 36, 37, 38, 39.

## Patentansprüche

1. Unterflur-Radsatzdrehmaschine (1) zum Reprofilieren der Räder (28, 29) von Eisenbahn-Radsätzen (30), mit zwei je einem Rad (28, 29) des Radsatzes (30) zugeordneten Maschineneinheiten (3,4), von denen jede einen Maschinenständer (6,7), einen Drehsupport (8, 9), eine Achslagerstützvorrichtung, (10, 11) zwei an ein Rad (28, 29) des Radsatzes (30) andrückbare und in einem Reibrollenträger (40,41) gelagerte Reibrollen aufweist, wobei mindestens eine der beiden Reibrollen (36, 37, 38, 39) eines jeden Reibrollenträgers (40, 41) antreibbar ist und wobei jeder Reibrollenträger (40, 41) um eine in der Mittenebene (44) der Unterflur-Radsatzdrehmaschine (1) bewegbare Schwenkachse (42, 43) schwenkbar ist, dadurch gekennzeichnet, daß an jeden Reibrollenträger (40, 41) zwei Andrückvorrichtungen (58, 59, 60, 61) angelenkt sind, die in Bezug auf die zugehörige Schwenkachse (42, 43) entgegengesetzt wirkende Drehmomente erzeugen.

2. Unterflur-Radsatzdrehmaschine nach Anspruch 1, dadurch gekennzeichnet, daß jede Schwenkachse (42, 43) horizontal gelagert und vertikal beweglich ist.

3. Unterflur-Radsatzdrehmaschine nach den Ansprüchen 1 und 2, dadurch gekennzeichnet, daß jede Schwenkachse (42, 43) eine Symmetrieachse der Achsen (45, 46, 47, 48) zweier Reibrollen (36, 37, 38, 39) eines Reibrollenträgers (40, 41) ist.

4. Unterflur-Radsatzdrehmaschine nach den Ansprüchen 1 und 2, dadurch gekennzeichnet, daß jede Andrückvorrichtung (58, 59, 60, 61) aus einem Pneumatik-Balgzylinder (64, 65, 66, 67) und einem Hebelgetriebe (68, 69, 70, 71) besteht.

## Claims

1. An underfloor wheel lathe (1) for reprofiling the wheels (28, 29) of railway wheelsets (30), having two machine units (3, 4) allocated to each wheel (28, 29) of the wheelset (30), of which machine units each comprises a machine tool table (6, 7), a swivel head (8, 9), an axle mounting support device (10, 11), two friction rollers (36, 37, 38, 39) which can be pressed against a wheel (28, 29) of the wheelset (30) and are mounted in a friction roller carrier (40, 41), wherein at least one of the two friction rollers (36, 37, 38, 39) of each of a respective friction roller carrier (40, 41) can be driven and wherein each of the friction roller carriers (40, 41) can be swivelled about a swivel axis (42, 43) which is movable in the middle plane (44) of the underfloor wheel lathe (1), characterised in that two auxiliary roller systems (58, 59, 60, 61) are articulated to each friction roller carrier (40, 41) which auxiliary roller systems produce turning moments working in opposition to the associated swivel axis (42, 43).

2. An underfloor wheel lathe according to claim 1, characterised in that each swivel axis (42, 43) is horizontally mounted and is vertically moveable.

3. An underfloor wheel lathe according to claims 1 and 2, characterised in that each swivel axis (42, 43) is an axis of symmetry of the axes (45, 46, 47, 48) of two friction rollers (36, 37, 38, 39) of a friction roller carrier (40, 41).

4. An underfloor wheel lathe according to claims 1 and 2, characterised in that each auxiliary roller system (58, 59, 60, 61) consists of a cushion type pneumatic cylinder (64, 65, 66, 67) and of a lever mechanism (68, 69, 70, 71).

## Revendications

1. Tour à roues en fosse (1) pour le reprofilage des roues (28, 29) d'essieux ferroviaires (30), avec deux unités d'usinage (3, 4) prévues chacune pour une roue (28, 29) de l'essieu (30), chacune comprenant un bâti de machine (6, 7), un porte-outil (8, 9), un dispositif de support de boîte d'essieu (10, 11), deux rouleaux de friction (36, 37, 38, 39) qui peuvent être pressés contre une roue (28, 29) de l'essieu (30) et sonbt montés à rotation dans un support de rouleaux (40, 41), dans lequel l'un au moins des deux rouleaux de friction (36, 37, 38, 39) de chaque support (40, 41) de rouleaux de friction peut être entraîné, et chaque support (40, 41) de rouleau de friction peut pivoter autour d'un axe de pivotement (42, 43) mobile dans le plan médian (44) du tour à roue en fosse, caractérisé en ce que deux dispositifs de pression (58, 59, 60, 61) sont reliés à chaque support de rouleaux de friction (40, 41), dispositifs qui produisent des couples de rotation opposés par rapport à l'axe de pivotement (42, 43) correspondant.

2. Tour à roues en fosse selon la revendication 1, caractérisé en ce que chaque axe de pivotement (42, 43) est monté à rotation horizontalement, et est mobile verticalement.

3. Tour à roues en fosse selon les revendications 1 et 2, caractérisé en ce que chaque axe de pivotement (42, 43) est un axe de symétrie de l' axe (45, 46, 47, 48) du deuxième rouleau de friction (36, 37, 38, 39) d'un support de rouleaux de friction (40, 41).

4. Tour à roues en fosse selon les revendications 1 et 2, caractérisé en ce que chaque dispositif de pression (58, 59, 60, 61) comprend un cylindre pneumatique à soufflet (64, 65, 66, 67) et un mécanisme à leviers (68, 69, 70, 71).
